# FASCICULE DE BREVET EUROPEEN

(11) **EP 1 028 010 B1**
(45) Date de publication et mention de la délivrance du brevet: **11.06.2003**
(21) Numéro de dépôt: 00400331.5
(22) Date de dépôt: 08.02.2000
(51) Int. Cl.: B60G 15/07, B62D 17/00

(54) **Dispositif de suspension du type Mac Pherson pour véhicule**
Vorrichtung für eine MacPherson-Typ-Fahrzeugaufhängung
Device for a MacPherson type vehicle suspension

(30) Priorité: 09.02.1999 FR 9901484
(43) Date de publication de la demande: 16.08.2000
(73) Titulaire: Allevard Ressorts Automobile, 92210 Saint-Cloud (FR)
(72) Inventeur: Hastey, Jean-Paul F., 59500 Douai (FR)
(74) Mandataire: Busnel, Jean-Benoît

(56) Documents cités:
- EP-A- 0 352 184
- DE-A- 4 137 447
- FR-A- 2 759 752
- GB-A- 2 158 549
- US-A- 4 325 566
- US-A- 4 681 304
- PATENT ABSTRACTS OF JAPAN vol. 018, no. 413 (M-1649), 3 août 1994 (1994-08-03) & JP 06 123328 A (TOYOTA MOTOR CORP), 6 mai 1994 (1994-05-06)
- PATENT ABSTRACTS OF JAPAN vol. 016, no. 438 (M-1309), 11 septembre 1992 (1992-09-11) & JP 04 151311 A (NISSAN MOTOR CO LTD), 25 mai 1992 (1992-05-25)

## Description

La présente invention concerne un dispositif de suspension du type Mac Pherson pour véhicule, ainsi qu'un procédé de montage du dispositif de suspension sur le véhicule.

Plus particulièrement, le dispositif de suspension du type Mac Pherson comprend un amortisseur télescopique constitué d'un corps cylindrique dans lequel est susceptible de coulisser une tige de raccordement. Le corps cylindrique est destiné à être raccordé à des moyens de support de l'une des roues du véhicule, tandis que la tige de raccordement est reliée à la structure ou caisse du véhicule par l'intermédiaire d'une articulation coopérant avec un ressort hélicoïdal.

L'articulation comprend un flasque raccordé à la tige de raccordement et un organe annulaire élastiquement déformable interposé entre le flasque et une attache supérieure destinée à être fixée à la structure ou caisse du véhicule.

Le dispositif de suspension comprend également un élément de butée de rebond axial fixé à la tige de raccordement, ledit élément de butée comportant, sur sa face disposée en regard de l'articulation, des moyens de mise en butée de rebond axial destinés à limiter le débattement axial du dispositif lors de son fonctionnement après montage sur la structure du véhicule.

Ces moyens de mise en butée de rebond axial sont réalisés dans une matière élastiquement déformable et ils servent uniquement lorsque le débattement axial de la tige de raccordement est relativement important.

Dans ce type de dispositif de suspension conventionnel, l'attache supérieure ou plus précisément sa partie radialement extérieure est munie de zones d'appui destinées à être fixées sur la structure ou caisse du véhicule.

A cet effet, ladite structure ou caisse du véhicule comporte généralement une ouverture cylindrique dont l'axe de symétrie doit être, lors du montage et après montage, disposé coaxialement à celui de la tige de raccordement.

En outre, pour assembler l'articulation à la structure ou caisse du véhicule, il est impératif que les zones d'appui de l'attache supérieure soient parallèles aux zones d'appui de la structure du véhicule et que l'axe de symétrie de l'articulation soit colinéaire à celui de la tige de raccordement afin que l'assemblage se fasse dans de bonnes conditions.

Toutefois, afin de compenser les différentes forces s'appliquant sur une telle suspension lors de son fonctionnement, les zones d'appui de l'articulation possèdent une liberté en débattement par rapport à la tige de raccordement afin de lui permettre de s'orienter en fonction du mouvement relatif de la roue par rapport à la structure ou caisse du véhicule.

Ainsi, étant donné que l'articulation coopère avec le ressort et que la ligne d'action de ce dernier n'est pas colinéaire à l'axe de l'amortisseur ou plus précisément à l'axe de la tige de raccordement, il s'ensuit qu'en position détendue de l'articulation, c'est-à-dire lorsque celle-ci n'est pas fixée sur la structure ou caisse du véhicule, les zones d'appui de l'attache supérieure ont tendance, sous l'action du ressort, à s'incliner par rapport à l'axe de la tige de raccordement et donc par rapport aux zones d'appui de la structure du véhicule.

Dès lors, il est nécessaire d'amener manuellement les zones d'appui de l'attache supérieure parallèlement aux zones d'appui de la structure ou caisse du véhicule, ce qui rend l'assemblage très difficile, voire impossible de façon automatisée.

Un dispositif de suspension du type Mac Pherson pour véhicule ayant les caractéristiques du préambule de la revendication 1 est décrit dans le document FR-A- 2 759 752.

La présente invention a pour but de surmonter les problèmes techniques posés par l'état actuel de la technique, et mentionnés ci-dessus, en proposant un dispositif de suspension tendant à éliminer l'inclinaison de l'articulation par rapport à la tige de raccordement et à la structure de véhicule et dont le procédé de montage est facile à mettre en oeuvre.

L'invention a donc pour premier objet, un dispositif de suspension du type Mac Pherson pour véhicule, comprenant un amortisseur télescopique constitué d'un corps cylindrique dans lequel est susceptible de coulisser une tige de raccordement, ledit corps cylindrique étant destiné à être raccordé à des moyens de support de l'une des roues du véhicule tandis que la tige de raccordement est reliée à la structure ou caisse du véhicule par l'intermédiaire d'une articulation coopérant avec un ressort hélicoïdal, ladite articulation comprenant un flasque raccordé à la tige de raccordement et un organe annulaire élastiquement déformable interposé entre le flasque et une attache supérieure destinée à être fixée à la structure ou caisse du véhicule, le dispositif de suspension comprenant également un élément de butée de rebond axial fixé à la tige de raccordement, ledit élément de butée comportant sur sa face disposée en regard de l'articulation des moyens de mise en butée de rebond axial destinés à limiter le débattement axial du dispositif lors de son fonctionnement après montage sur la structure du véhicule, caractérisé en ce que l'élément de butée est constitué par une coupelle dont la face opposée à l'articulation, est pourvue d'un rebord extérieur saillant, et en ce que ledit rebord saillant est en contact de butée sur l'attache supérieure afin de limiter l'inclinaison de l'axe de l'articulation par rapport à l'axe de l'amortisseur lors du montage à la structure ou caisse du véhicule.

Selon une caractéristique de l'invention, l'élément de butée est disposé en appui axial fixe contre le flasque

Selon une autre caractéristique, l'attache supérieure est pourvue d'une portion sensiblement verticale délimitant un logement sensiblement cylindrique et le rebord extérieur saillant de l'élément de butée est directement en contact de butée avec ladite portion de l'attache supérieure lors du montage du dispositif à la structure ou caisse du véhicule.

Selon encore une autre caractéristique, l'inclinaison de l'axe de l'articulation par rapport à l'axe de l'amortisseur est au plus égale à 3,5° avant montage du dispositif sur la structure du véhicule.

Selon une autre caractéristique avantageuse, la partie radialement extérieure de l'articulation, comprend des zones d'appui destinées à être fixées sur le rebord d'une ouverture réalisée sur la structure ou caisse du véhicule.

Selon encore une autre caractéristique avantageuse, l'élément de butée est fixé à la tige de raccordement par une liaison vis-écrou.

L'invention a également pour objet un procédé de montage d'un dispositif de suspension du type Mac Pherson pour véhicule, comprenant un amortisseur télescopique constitué d'un corps cylindrique dans lequel est susceptible de coulisser une tige de raccordement, ledit corps cylindrique étant destiné à être raccordé à des moyens de support de l'une des roues du véhicule tandis que la tige de raccordement est reliée sur la structure ou caisse du véhicule par l'intermédiaire d'une articulation coopérant avec un ressort hélicoïdal, ladite articulation comprenant un flasque raccordé à la tige de raccordement et un organe annulaire élastiquement déformable interposé entre le flasque et une attache supérieure destinée à être fixée à la structure ou caisse du véhicule, le dispositif comprenant également un élément de butée de rebond axial comportant sur sa face disposée en regard de l'articulation des moyens de mise en butée de rebond axial destinés à limiter le débattement axial du dispositif lors de son fonctionnement après montage sur la structure du véhicule, caractérisé en ce qu'on réalise les étapes suivantes :
- on réalise sur la face de l'élément de butée opposée à l'articulation, un rebord extérieur saillant, avant la fixation dudit élément de butée.
- on fixe sur la tige de raccordement, l'élément de butée dont l'une des faces est directement en regard de l'articulation, l'attache supérieure venant en appui direct sur le rebord extérieur saillant de l'élément de butée;
- on réalise sur la structure ou caisse du véhicule, une ouverture dont le diamètre est supérieur à celui de l'élément de butée;
- on raccorde le corps cylindrique de l'amortisseur aux moyens de support de l'une des roues du véhicule; et
- on fixe la partie radialement extérieure de l'articulation sur le rebord de l'ouverture réalisée sur la structure ou caisse du véhicule.

Selon une caractéristique du procédé, on dispose l'élément de butée en appui axial fixe contre le flasque.

Selon une autre caractéristique, on fixe ledit élément de butée à la tige de raccordement au moyen d'une liaison vis-écrou.

Le dispositif de suspension de l'invention permet de résoudre de façon simple et efficace le problème du montage de la tige de raccordement à la structure ou caisse du véhicule par l'intermédiaire de l'articulation, en réalisant un rebord extérieur saillant sur l'élément de butée qui s'oppose de façon appropriée, à l'action du ressort sur l'attache supérieure de l'articulation.

Un autre avantage réside dans le fait que le dispositif permet de réduire substantiellement le temps nécessaire au montage de la suspension sur le véhicule, le montage pouvant, par ailleurs, se faire de façon automatisée.

L'invention sera mieux comprise à la lecture de la description qui va suivre accompagnée des dessins sur lesquels :
- la figure 1 représente une vue en coupe d'un dispositif connu, une fois assemblé sur la structure ou caisse du véhicule,
- la figure 2 représente une vue en coupe du dispositif connu, avant l'assemblage à la structure ou caisse du véhicule, et
- la figure 3 représente une vue en coupe du dispositif selon l'invention avant l'assemblage à la structure ou caisse du véhicule.

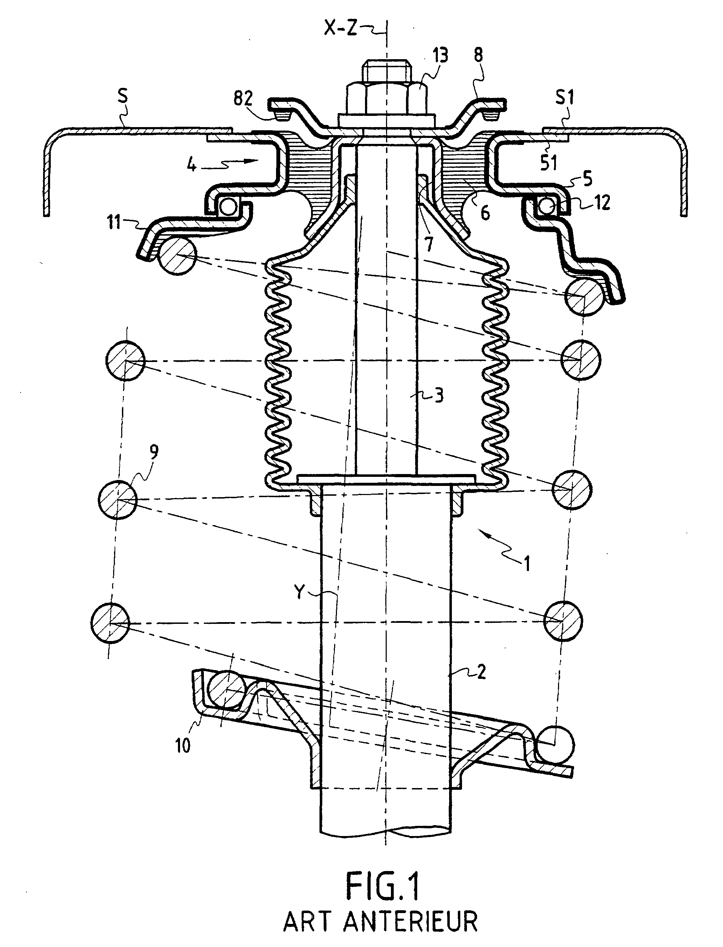

En se reportant à la figure 1, il est représenté un dispositif de suspension qui est constitué d'un amortisseur télescopique 1 mécaniquement interposé entre un premier ensemble fixe formé par la structure ou caisse S d'un véhicule et un deuxième ensemble mobile (non représenté) constitué par des moyens de support de l'une des roues du véhicule.

L'amortisseur télescopique 1, qui est à déplacement rectiligne alternatif, comprend un corps cylindrique tubulaire 2 dans lequel peut coulisser une tige de raccordement 3.

Le corps cylindrique 2 est directement raccordé aux moyens de support de l'une des roues du véhicule et la tige de raccordement 3 est reliée à la structure ou caisse S du véhicule par l'intermédiaire d'une articulation 4.

Cette articulation 4 comprend un flasque 7 raccordé à la tige de raccordement 3 et un organe annulaire élastiquement déformable 6 interposé entre le flasque 7 et une attache supérieure 5.

L'attache supérieure 5, qui constitue la partie radialement extérieure de l'articulation 4, comporte des zones d'appui 51 destinées à être fixées sur des zones d'appui S1 de la structure ou caisse S du véhicule.

Le dispositif de suspension comprend également un élément de butée 8 de rebond axial qui est fixé à la tige de raccordement 3 tout en étant situé au-dessus de l'articulation 4.

Cet élément de butée comporte, sur sa face inférieure disposée en regard de l'articulation 4, des moyens de mise en butée de rebond axial 82 destinés à limiter le débattement axial du dispositif lors de son fonctionnement après montage sur la structure du véhicule.

Ces moyens de mise en butée axiale 82 sont constitués par un anneau élastiquement déformable qui est destiné à venir en contact de butée avec une portion médiane de l'attache supérieure 5 recouverte par l'organe annulaire 6, lorsque la tige de raccordement 3 subie des débattements ou des déplacements axiaux relativement importants.

De même, lorsque la roue du véhicule n'est plus en contact avec le sol, pour des raisons quelconques telles que le passage d'un dos-d'âne ou d'un relief ou lorsque le véhicule est sur un pont levant, les moyens de mise en butée 82 viennent alors en contact de butée avec l'articulation 4 ou plus précisément avec la portion médiane de l'attache supérieure 5 afin d'éviter une déformation irréversible de l'organe annulaire 6 élastiquement déformable.

A l'inverse, les petits débattements axiaux ainsi que les oscillations mineures, dus aux mouvements relatifs de la roue par rapport à la structure du véhicule, sont en partie compensés par la tige de raccordement 3 et l'élasticité de l'organe annulaire.

En position normale de fonctionnement, il est indispensable que l'axe de symétrie Z de l'articulation 4 soit colinéaire à l'axe X de l'amortisseur télescopique 1 afin d'éviter des phénomènes parasites de frottement, dans l'amortisseur, nuisibles au confort des passagers et à la tenue de route du véhicule.

Ainsi, pour faciliter le montage de l'amortisseur sur la structure du véhicule, il est préférable que l'inclinaison de l'axe de symétrie Z de l'articulation 4 par rapport à l'axe X de la tige de raccordement 3 soit la plus faible possible et que les zones d'appui 51 et Si de l'attache supérieure et de la structure du véhicule soient parallèles entre elles.

Toutefois, comme on peut le voir sur les figures 1 à 3, le dispositif de suspension comprend un ressort 9 qui coopère avec l'amortisseur télescopique 1 et l'articulation 4 afin d'absorber les débattements de la roue.

Le ressort 9 est disposé entre une coupelle inférieure 10 fixée sur le corps cylindrique 2 et une coupelle supérieure 11 solidaire de l'articulation 4. Un palier 12, tel qu'un roulement ou une butée à aiguille, est interposé entre la coupelle supérieure 11 et l'extrémité inférieure de l'attache supérieure 5 pour leur permettre un mouvement rotatif relatif autour de la ligne d'action Y du ressort 9.

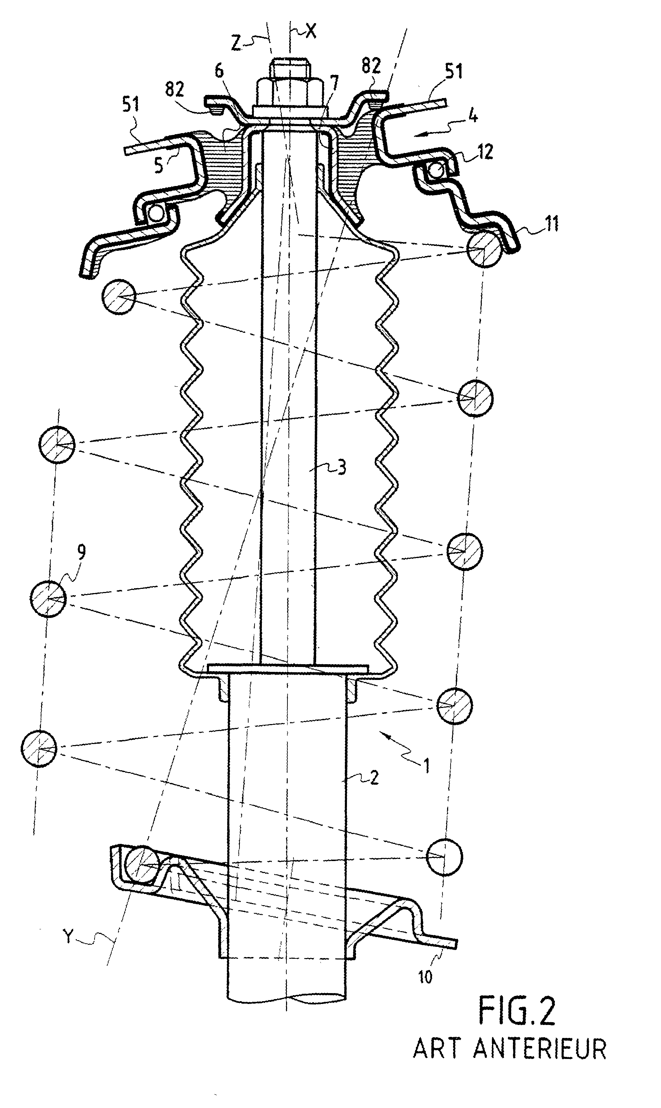

Ainsi, comme représenté sur la figure 2, lorsque le dispositif de suspension n'est pas relié à la structure ou caisse S du véhicule, la ligne d'action Y du ressort 9 n'étant pas colinéaire à l'axe X de l'amortisseur, l'articulation 4 a tendance à s'incliner par rapport à la tige de raccordement 3.

En effet, l'anneau 82 élastiquement déformable doit impérativement être disposé à une certaine distance de l'attache supérieure 5 sans quoi, lors de débattements axiaux de faible amplitude, cet anneau 82 viendrait directement en contact de butée avec l'attache supérieure ce qui aurait pour effet d'amortir brutalement les petits déplacements axiaux et donc de nuire au confort des passagers et à la tenue de route du véhicule.

Cette inclinaison entre l'axe de symétrie Z de l'articulation 4 et l'axe X de l'amortisseur 1, suivant les matériaux utilisés pour réaliser l'organe annulaire 6 et l'anneau 82, peut être de l'ordre de 15°.

Dès lors, on comprend que l'assemblage des zones d'appui 51 de l'attache supérieure 5 sur les zones d'appui S1 de la structure ou caisse du véhicule, nécessite de la part d'un opérateur, un effort antagoniste afin de rétablir la coaxialité des axes X et Z et donc le parallélisme des zones d'appui 51 et S1.

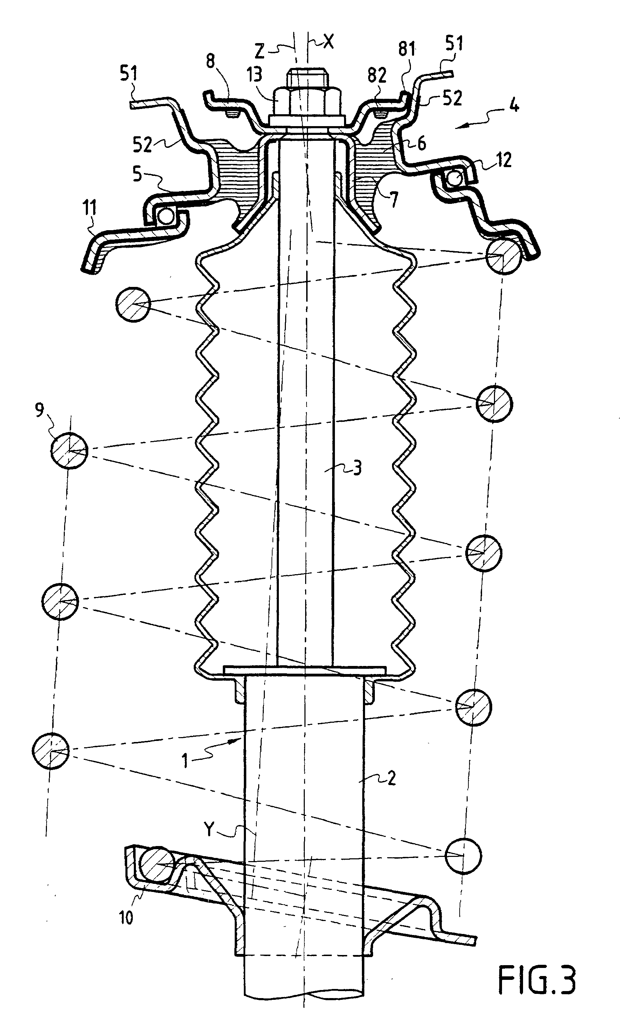

Comme on peut le voir sur la figure 3, afin de faciliter le montage de l'attache supérieure 5 sur la structure du véhicule, l'élément de butée 8 qui se présente sous la forme d'une coupelle, comprend sur sa face supérieure opposée à l'articulation 4, un rebord extérieur saillant 81.

De manière complémentaire, l'attache supérieure 5 comprend une portion 52 sensiblement verticale qui délimite un logement cylindrique dans lequel est logé l'élément de butée 8, de telle manière que le rebord extérieur saillant 81 soit disposé en regard de la portion 52 verticale de l'attache supérieure 5.

Ainsi, lorsque le ressort 9 agit sur l'attache supérieure 5 par l'intermédiaire de la coupelle supérieure 11 et le palier 12, ladite attache supérieure 5 vient directement en contact de butée sur le rebord extérieur saillant 81 de l'élément de butée 8, ce qui limite l'inclinaison de l'articulation 4 ou plus précisément l'inclinaison de l'attache supérieure 5 par rapport à l'axe X de l'amortisseur 1.

Dès lors, les zones d'appui 51 de l'attache supérieure qui sont sensiblement perpendiculaires à la portion 52 verticale, se présentent sous un angle d'inclinaison faible par rapport aux zones d'appui 51 de la structure du véhicule, ce qui permet un montage facile et automatisé de l'ensemble.

Dès lors, comme représenté sur la figure 3, afin de procéder à l'assemblage de l'ensemble, on réalise sur la structure ou caisse S du véhicule, une ouverture dont le diamètre est légèrement inférieur à celui de la partie radialement extérieure de l'attache supérieure qui comporte les zones d'appui 51, et on raccorde le corps cylindrique 2 de l'amortisseur aux moyens de support de l'une des roues du véhicule.

Ensuite, on fixe la partie radialement extérieure de l'articulation 4 qui comporte les zones d'appui 51 sur le rebord S1 de l'ouverture réalisée sur la structure ou caisse S du véhicule.

Cette fixation pourra notamment être réalisée par l'intermédiaire de goujons disposés régulièrement sur le rebord S1 de l'ouverture.

L'inclinaison de l'articulation 4 par rapport à la tige de raccordement 3 étant fonction du diamètre externe du rebord saillant 81 et du diamètre interne du logement cylindrique de l'attache supérieure, selon un mode préféré de réalisation, cette inclinaison sera limitée au plus à 3,5°, avant montage du dispositif sur la structure du véhicule.

## Revendications

1. Dispositif de suspension du type Mac Pherson pour véhicule, comprenant un amortisseur télescopique (1) constitué d'un corps cylindrique (2) dans lequel est susceptible de coulisser une tige de raccordement (3), ledit corps cylindrique (2) étant destiné à être raccordé à des moyens de support de l'une des roues du véhicule tandis que la tige de raccordement (3) est reliée à la structure ou caisse (S) du véhicule par l'intermédiaire d'une articulation (4) coopérant avec un ressort hélicoïdal (9), ladite articulation (4) comprenant un flasque (7) raccordé à la tige de raccordement (3) et un organe annulaire (6) élastiquement déformable interposé entre le flasque (7) et une attache supérieure (5) destinée à être fixée à la structure ou caisse (S) du véhicule, le dispositif de suspension comprenant également un élément de butée de rebond axial fixé à la tige de raccordement (3), ledit élément de butée (8) comportant sur sa face disposée en regard de l'articulation (4) des moyens de mise en butée de rebond axial (82) destinés à limiter le débattement axial du dispositif lors de son fonctionnement après montage sur la structure du véhicule, **caractérisé en ce que** l'élément de butée (8) est constitué par une coupelle dont la face opposée à l'articulation (4), est pourvue d'un rebord extérieur saillant (81), et **en ce que** ledit rebord saillant (81) est en contact de butée sur l'attache supérieure (5) afin de limiter l'inclinaison de l'axe de l'articulation (4) par rapport à l'axe de l'amortisseur (1) lors du montage à la structure ou caisse du véhicule.

2. Dispositif selon la revendication 1, **caractérisé en ce que** l'élément de butée (8) est disposé en appui axial fixe contre le flasque (7).

3. Dispositif selon l'une ou l'autre des revendications 1 et 2, **caractérisé en ce que** l'attache supérieure (5) est pourvue d'une portion (52) sensiblement verticale délimitant un logement sensiblement cylindrique et **en ce que** le rebord extérieur saillant (81) de l'élément de butée (8) est directement en contact de butée avec ladite portion (52) de l'attache supérieure lors du montage du dispositif à la structure ou caisse du véhicule.

4. Dispositif selon l'une quelconque des revendications précédentes, **caractérisé en ce que** l'inclinaison de l'axe de l'articulation (4) par rapport à l'axe de l'amortisseur (1) est au plus égale à 3,5° avant montage du dispositif sur la structure du véhicule.

5. Dispositif selon l'une quelconque des revendications précédentes, **caractérisé en ce que** la partie radialement extérieure de l'articulation, comprend des zones d'appui (51) destinées à être fixées sur le rebord (S1) d'une ouverture réalisée sur la structure ou caisse (S) du véhicule.

6. Dispositif selon l'une quelconque des revendications précédentes, **caractérisé en ce que** l'élément de butée (8) est fixé à la tige de raccordement par une liaison vis-écrou (13).

7. Procédé de montage d'un dispositif de suspension du type Mac Pherson pour véhicule, comprenant un amortisseur télescopique (1) constitué d'un corps cylindrique (2) dans lequel est susceptible de coulisser une tige de raccordement (3), ledit corps cylindrique (2) étant destiné à être raccordé à des moyens de support de l'une des roues du véhicule tandis que la tige de raccordement (3) est reliée sur la structure ou caisse (S) du véhicule par l'intermédiaire d'une articulation (4) coopérant avec un ressort hélicoïdal (9), ladite articulation (4) comprenant un flasque (7) raccordé à la tige de raccordement (3) et un organe annulaire (6) élastiquement déformable interposé entre le flasque (7) et une attache supérieure (5) destinée à être fixée à la structure ou caisse du véhicule (5), le dispositif comprenant également un élément de butée de rebond axial (8) comportant sur sa face disposée en regard de l'articulation (4) des moyens de mise en butée de rebond axial (82) destinés à limiter le débattement axial du dispositif lors de son fonctionnement après montage sur la structure du véhicule, **caractérisé en ce qu'**on réalise les étapes suivantes :
- on réalise sur la face de l'élément de butée (8) opposée à l'articulation, un rebord extérieur saillant (81), avant la fixation dudit élément de butée.
- on fixe sur la tige de raccordement (3), l'élément de butée (8) dont l'une des faces est directement en regard de l'articulation (4), l'attache supérieure (5) venant en appui direct sur le rebord extérieur saillant (81) de l'élément de butée (8);
- on réalise sur la structure ou caisse (S) du véhicule, une ouverture dont le diamètre est supérieur à celui de l'élément de butée (8);
- on raccorde le corps cylindrique (2) de l'amortisseur (1) aux moyens de support de l'une des roues du véhicule; et
- on fixe la partie radialement extérieure de l'articulation (5) sur le rebord (S1) de l'ouverture réalisée sur la structure ou caisse du véhicule.

8. Procédé selon la revendication 7, **caractérisé en ce qu'**on dispose l'élément de butée (8) en appui axial fixe contre le flasque (7).

9. Procédé selon l'une ou l'autre des revendications 7 et 8, **caractérisé en ce qu'**on fixe ledit élément de butée (8) à la tige de raccordement (3) au moyen d'une liaison vis-écrou (13).

## Claims

1. Suspension device of the MacPherson type for a vehicle, comprising a telescopic damper (1) consisting of a cylindrical body (2) in which a connecting rod (3) can slide, the said cylindrical body (2) being intended to be connected to support means of one of the wheels of the vehicle while the connecting rod (3) is connected to the structure or body (S) of the vehicle via an articulation (4) collaborating with a helical spring (9), the said articulation (4) comprising a flange (7) connected to the connecting rod (3) and an elastically deformable annular member (6) inserted between the flange (7) and an upper fastener (5) intended to be fixed to the structure or body (S) of the vehicle, the suspension device also comprising an axial bounce stop fixed to the connecting rod (3), the said stop (8) comprising, on its face facing the articulation (4), axial bounce stop means (82) intended to limit the axial excursion of the device during its operation after mounting on the structure of the vehicle, **characterized in that** the stop (8) consists of a cup of which the face opposite the articulation (4) is provided with a protruding outer rim (81), and **in that** the said protruding rim (81) is in abutment contact with the upper fastener (5) so as to limit the inclination of the axis of the articulation (4) with respect to the axis of the damper (1) during mounting to the structure or body of the vehicle.

2. Device according to Claim 1, **characterized in that** the stop (8) is arranged as a fixed axial rest against the flange (7).

3. Device according to one or other of Claims 1 and 2, **characterized in that** the upper fastener (5) is provided with a more or less vertical portion (52) delimiting a more or less cylindrical housing and **in that** the protruding outer rim (81) of the stop (8) is in direct abutment contact with the said portion (52) of the upper fastener during mounting of the device to the structure or body of the vehicle.

4. Device according to any one of the preceding claims, **characterized in that** the inclination of the axis of the articulation (4) with respect to the axis of the damper (1) is at most equal to 3.5° prior to the mounting of the device on the structure of the vehicle.

5. Device according to any one of the preceding claims, **characterized in that** the radially outer part of the articulation comprises bearing zones (51) intended to be fixed to the rim (S1) of an opening made in the structure or body IS) of the vehicle.

6. Device according to any one of the preceding claims, **characterized in that** the stop (8) is fixed to the connecting rod by a screw-nut connection (13).

7. Method for mounting a suspension device of the MacPherson type for a vehicle, comprising a telescopic damper (1) consisting of a cylindrical body (2) in which a connecting rod (3) can slide, the said cylindrical body (2) being intended to be connected to support means of one of the wheels of the vehicle while the connecting rod (3) is connected to the structure or body (S) of the vehicle via an articulation (4) collaborating with a helical spring (9), the said articulation (4) comprising a flange (7) connected to the connecting rod (3) and an elastically deformable annular member (6) inserted between the flange (7) and an upper fastener (5) intended to be fixed to the structure or body (S) of the vehicle, the device also comprising an axial bounce stop (8) comprising, on its face facing the articulation (4), axial bounce stop means (82) intended to limit the axial excursion of the device during its operation after mounting on the structure of the vehicle, **characterized in that** the following steps are carried out:
- a protruding outer rim (81) is made on the face of the stop (8) opposite the articulation, before the said stop is attached;
- the stop (8) one of the faces of which directly faces the articulation (4) is fixed to the connecting rod (3), the upper fastener (5) coming to bear directly against the projecting outer rim (81) of the stop (8);
- an opening the diameter of which is greater than that of the stop (8) is made in the structure or body (S) of the vehicle;
- the cylindrical body (2) of the damper (1) is connected to the support means of one of the wheels of the vehicle; and
- the radially outer part of the articulation (5) is fixed to the rim (S1) of the opening made in the structure or body of the vehicle.

8. Method according to Claim 7, **characterized in that** the stop (8) rests so that it is axially fixed against the flange (7).

9. Method according to either one of Claims 7 and 8, **characterized in that** the said stop (8) is fixed to the connecting rod (3) by means of a screw-nut connection (13).

## Patentansprüche

1. Vorrichtung für eine Fahrzeugaufhängung vom Mac-Pherson-Typ, mit einem teleskopischen Dämpfer (1), der durch einen zylindrischen Körper (2) gebildet wird, in welchem eine Verbindungsstange (3) gleitend aufgenommen ist, wobei dieser zylindrische Körper (2) dazu bestimmt ist, mit Mitteln zum Lagern eines der Räder des Fahrzeugs verbunden zu werden, während die Verbindungsstange (3) mit dem Aufbau oder der Karosserie (S) des Fahrzeugs über ein Gelenk (4) gekoppelt ist, das mit einer Schraubenfeder (9) zusammenwirkt, wobei das Gelenk (4) einen Flansch (7) aufweist, der an der Verbindungsstange (3) angebracht ist, und ein ringförmiges elastisch verformbares Element (6), das sich zwischen dem Flansch (7) und einer oberen Halterung (5) befindet, die dazu bestimmt ist, am Aufbau oder an der Karosserie. (S) des Fahrzeugs angebracht zu werden, wobei die Aufhängevorrichtung auch ein Anschlagelement mit axialer Federung aufweist, das an der Verbindungsstange (3) angebracht ist, wobei das Anschlagelement (8) auf seiner Fläche, die dem Gelenk (4) gegenüberliegend vorgesehen ist, axial federnde Anschlagmittel (82) aufweist, die dazu bestimmt sind, die axiale Durchfederung der Vorrichtung in ihrem Betrieb nach der Montage an dem Aufbau des Fahrzeugs zu begrenzen, **dadurch gekennzeichnet, dass** das Anschlagelement (8) aus einer Schale besteht, deren dem Gelenk (4) gegenüberliegende Fläche mit einem hervorstehenden äußeren Rand (81) versehen ist, und dass dieser hervorstehende Rand (81) gegen die obere Halterung (5) anschlägt, um die Neigung der Achse des Gelenks (4) bezüglich der Achse des Dämpfers (1) bei der Montage an den Aufbau oder die Karosserie des Fahrzeugs zu beschränken.

2. Vorrichtung nach Anspruch 1, **dadurch gekennzeichnet, dass** das Anschlagelement (8) axial fest gegen den Flansch (7) anliegt.

3. Vorrichtung nach einem der Ansprüche 1 und 2, **dadurch gekennzeichnet, dass** die obere Halterung (5) mit einem Bereich (52) versehen ist, der im Wesentlichen vertikal verläuft und eine im Wesentliche zylindrische Aufnahme begrenzt und dass der hervorstehende äußere Rand (81) des Anschlagelements (8) direkt gegen den Bereich (52) der oberen Halterung bei der Montage der Vorrichtung am Aufbau oder an der Karosserie des Fahrzeugs anschlägt.

4. Vorrichtung nach einem der vorangehenden Ansprüche, **dadurch gekennzeichnet, dass** die Neigung der Achse des Gelenks (4) bezüglich der Achse des Dämpfers (1) höchstens 3,5° vor der Montage der Vorrichtung am Aufbau des Fahrzeugs beträgt.

5. Vorrichtung nach einem der vorangehenden Ansprüche, **dadurch gekennzeichnet, dass** der radial äußere Bereich des Gelenks Anlagebereiche (51) aufweist, die dazu bestimmt sind, an dem Rand (S1) eine Öffnung angebracht zu werden, die auf dem Aufbau oder auf der Karosserie (S) des Fahrzeugs realisiert ist.

6. Vorrichtung nach einem der vorangehenden Ansprüche, **dadurch gekennzeichnet, dass** das Anschlagelement (8) an der Verbindungsstange mittels einer Schrauben-Spannbacken-Verbindung (13) befestigt ist.

7. Verfahren zum Anbringen einer Fahrzeugaufhängung vom Mac-Pherson-Typ, mit einem teleskopischen Dämpfer (1) der durch einen zylindrischen Körper (2) gebildet wird, in welchem eine Verbindungsstange (3) gleitend aufgenommen ist, wobei dieser zylindrische Körper (2) dazu bestimmt ist, mit Mitteln zum Lagern eines der Räder des Fahrzeugs verbunden zu werden, während die Verbindungsstange (3) mit dem Aufbau oder der Karosserie (S) des Fahrzeugs über ein Gelenk (4) gekoppelt ist, das mit einer Schraubenfeder (9) zusammenwirkt, wobei das Gelenk (4) einen Flansch (7) aufweist, der an der Verbindungsstange (3) angebracht ist, und ein ringförmiges elastisch verformbares Element (6), das sich zwischen dem Flansch (7) und einer oberen Halterung (5) befindet, die dazu bestimmt ist, am Aufbau oder an der Karosserie (S) des Fahrzeugs angebracht zu werden, wobei die Aufhängevorrichtung auch ein Anschlagelement mit axialer Federung aufweist, das an der Verbindungsstange (3) angebracht ist, wobei das Anschlagelement (8) auf seiner Fläche, die dem Gelenk (4) gegenüberliegend vorgesehen ist, axial federnde Anschlagmittel (82) aufweist, die dazu bestimmt sind, die axiale Durchfederung der Vorrichtung in ihrem Betrieb nach der Montage an dem Aufbau des Fahrzeugs zu begrenzen, **dadurch gekennzeichnet, dass** die folgenden Schritte durchgeführt werden:
- an der dem Gelenk gegenüberliegenden Fläche des Anschlagelements (8) wird vor der Befestigung des Anschlagelements ein äußerer hervorstehender Rand (81) vorgesehen;
- an der Befestigungsstange (3) wird das Anschlagelement (8) befestigt, dessen eine Fläche dem Gelenk (4) direkt gegenüberliegt, wobei die obere Halterung (5) direkt an dem äußeren hervorstehenden Rand (81) des Anschlagelements (8) anliegt;
- an dem Aufbau oder der Karosserie (S) des Fahrzeugs wird eine Öffnung ausgebildet, deren Durchmesser größer als der Durchmesser des Anschlagelements (8) ist;
- der zylindrische Körper (2) des Dämpfers (1) wird mit Mitteln zum Lagern eines der Räder des Fahrzeugs verbunden; und
- der radial äußere Bereich des Gelenks (4) wird an dem Rand (S1) der an dem Aufbau oder der Karosserie des Fahrzeugs ausgebildeten Öffnung befestigt.

8. Verfahren nach Anspruch 7, **dadurch gekennzeichnet, dass** das Anschlagelement (8) so angeordnet wird, dass es axial fest gegen den Flansch (7) anliegt.

9. Verfahren nach einem der Ansprüche 7 und 8, **dadurch gekennzeichnet, dass** das Anschlagelement (8) mittels einer Schrauben-Spannbacken-Verbindung (13) mit der Verbindungsstange (8) verbunden wird.
